# EUROPEAN PATENT APPLICATION

(11) **EP 4 696 908 A1**
(43) Date of publication of application: **18.02.2026**
(21) Application number: 25195540.7
(22) Date of filing: 12.08.2025
(51) Int. Cl.: F16K 11/07, F16K 24/00

(54) **FAST FILL VALVE FOR CLOSED LOOP FLUID SYSTEM**

(30) Priority: 14.08.2024 US 202418804891
(71) Applicant: Tesla, Inc., Austin, TX 78725 (US)
(72) Inventor: KOPITZ, Jan, Austin, Texas, 78725 (US); KEMP, Stephen Andrew, Austin, Texas, 78725 (US); CALDERONE, John David, Austin, Texas, 78725 (US); JACOBS, Eric William, Austin, Texas, 78725 (US); BERNHOLTZ, Zackary, Austin, Texas, 78725 (US); ROCHE, Nicholas Albert, Austin, Texas, 78725 (US); GROSSMAN, Adrian Matthias, Austin, Texas, 78725 (US); MORONA, Gherardo, Austin, Texas, 78725 (US); PICKERING, Michael Len, Austin, Texas, 78725 (US)
(74) Representative: Bryn-Jacobsen, Caelia

(57) **Abstract**

A fluid control system with a fast fill valve (200) for expedited filling and draining of closed-loop systems allowing for temporarily opening the loop to allow filling without a separate vacuum process The valve operates in two positions: an open position for rapid, unidirectional fluid ingress and passive air egress and a closed position for a secure, sealed state during normal operation. Some examples include vacuum assisted air egress in parallel with filling.

## Description

### TECHNICAL FIELD

Examples of the present disclosure relate generally to the field of filling processes for closed-loop fluid systems. More specifically, some examples relate to the design and implementation of methods for the efficient introduction, circulation, and management of fluids within systems integral to automotive, aerospace, heavy machinery, and Heating, Ventilation, and Air Conditioning (HVAC) industries.

### BACKGROUND

Closed-loop fluid systems can be important components in various industrial and automotive applications, particularly for thermal management and cooling purposes. Traditional methods of filling these systems with coolant or other operational fluids involve a multi-step process that can be time-consuming and inefficient. The process may include one or more of a positive pressure test or vacuum leak test, a vacuum step to remove air, and finally, the introduction of the coolant. This conventional approach not only requires significant time but also has the potential for introducing air pockets into the system, which can impair performance and lead to maintenance issues. Air pockets typically need to be bled out which can be time consuming. Furthermore, the industry has seen a growing need for improved manufacturing efficiency and cost reduction while maintaining high standards of quality and reliability. The time spent on filling and testing fluid systems is a critical factor in production throughput and operational costs.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a diagram depicting an example of a fast fill valve, according to certain examples.
FIG. 2 is a diagram depicting an example of a fast fill valve, according to certain examples.
FIG. 3 is a diagram depicting an example of a fast fill valve, according to certain examples.
FIG. 4 is a diagram depicting an example of a fast fill valve, according to certain examples.
FIG. 5 is a diagram depicting a cross section of an internal valve component of a fast fill valve, according to certain examples.
FIG. 6 is a diagram depicting an example of a fast fill valve, wherein a valve body of the fast fill valve is integrated within a fluid reservoir of a closed-loop fluid system, according to certain examples.
FIG. 7 is a diagram depicting an example of a fast fill valve, wherein a valve body of the fast fill valve is integrated within a fluid reservoir of a closed-loop fluid system, according to certain examples.
FIG. 8 is a diagram depicting an example of a fast fill valve, wherein a valve body of the fast fill valve is integrated within a fluid reservoir of a closed-loop fluid system, according to certain examples.

### DETAILED DESCRIPTION

In the realm of industrial and automotive manufacturing, the efficiency of closed-loop fluid systems can be important, particularly when it comes to the thermal management and cooling of machinery and vehicles. The conventional methodology for filling these systems can often present a bottleneck in production, involving laborious steps that not only consume valuable time but also increase the risk of introduction of air into the system, which can compromise system performance and longevity. The industry's pursuit of enhanced manufacturing processes has led to a demand for innovative solutions capable of streamlining the fluid filling stage, thereby reducing cycle times and associated costs while upholding stringent quality standards.

Some examples herein seek to optimize processes, reduce cycle times, and enhance the overall efficiency of production lines. In light of conventional challenges, some examples seek to provide advancement in fluid control technology that can expedite the filling process, ensure accurate fluid levels, and maintain system integrity. Such improvements may be beneficial in reducing manufacturing time, minimizing potential for errors, and ultimately leading to cost savings and increased production capacity.

Examples of the present disclosure seek to address current needs by introducing a novel fluid control system equipped with a fast fill valve that significantly expedites the filling and testing procedures of closed-loop fluid systems. According to certain examples, a fast fill valve operates in one or more positions that include: an open position that facilitates rapid and directed fluid ingress, and a closed position that provides a hermetic seal for the system's normal functioning as a closed-loop system.

The valve may be positioned downstream of a venting passage, within a specified volumetric distance, to optimize the filling process and air evacuation. In some examples, the specified volumetric distance may be determined by a flow split in the forwards and backwards direction of the fast fill valve. For example, a flow split may refer to the division or distribution of fluid flow within the system, particularly at junctions or points where the flow path diverges. Flow split can be influenced by factors such as the system's geometry, pressure differentials, and the positioning of components like valves or fill interfaces. This ensures that the air within the system is efficiently directed towards the venting passage during the filling process to allow for its expulsion, and to prevent formation of air pockets that could compromise system performance.

This volumetric distance, defined as a quantity of the fluid capacity of the system between the venting passage and the valve, may for example be a maximum of 500 milliliters (mL). This ensures that the air within the system is efficiently directed towards the venting passage during the filling process, allowing for its expulsion and preventing the formation of air pockets that could compromise system performance.

The venting passage may be located in various parts of the system depending on design preferences. In some examples, it is part of the fluid reservoir, positioned to allow air to escape from the system. Alternatively, the venting passage may be incorporated into the valve assembly itself, enabling the valve to admit fluid into the system and allow air to escape through the same node via one or more specially configured channels or passages.

In some examples, the control valve includes a set of snap features. For example, the valve body, which interfaces with the fluid hose of the closed-loop fluid system, is constructed to house an internal valve component. The internal valve component is designed to function as a one-way valve when in the first position, facilitating the fluid fill process, and then to allow fluid to circulate through the system when in the second position, which is the normal operating state of the system.

The set of snap features are integrated upon the surface of the valve body and are correspondingly matched with complementary features on the internal valve component. The snap features are configured to engage securely when the internal valve component is in either the first or second position. When the internal valve component is in the first position, the snap features hold it in place to allow for the unidirectional flow of fluid into the system. This position is typically used during the filling process, where the valve facilitates the rapid introduction of fluid while preventing backflow.

Once the filling process is complete, the internal valve component is transitioned to the second position. In this position, the snap features engage in a different set of corresponding locations on the valve body and internal valve component, securing the internal component in place for normal fluid circulation. This transition may be actuated by an external mechanism, such as a manual, pneumatic, or hydraulic actuator, which applies a force to the internal valve component, causing it to move and the snap features to engage in the second position.

In some examples, the valve body of the control valve comprises a generally cylindrical in shape, that includes a pair of opposing barbs that extend radially from the valve body. These barbs are designed to facilitate a secure and leak-proof connection between the valve body and a fluid hose of the closed-loop fluid system. For example, the barbs may be tapered and ridged, allowing them to grip the inside of a hose when inserted.

In some examples, the valve body includes an internal cavity that is dimensioned to receive the internal valve component. For example, the internal valve component may be configured to match the internal contours of the valve body and may include one or more passages that align with passthroughs of the valve body based on a position of the internal valve component.

In some examples, the internal valve component is designed with one or more passages that, when aligned with corresponding passages in the valve body, allow: fluid to flow into the system; fluid to escape the system; and air to escape the system.

For example, in the open position, which is typically the position for fluid fill, the internal component is positioned such that its passages align with a passage of the valve body that flows into the system. This alignment creates a fluid path, enabling fluid to enter the system in a single direction, consistent with the requirements of the closed-loop fluid system during the filling process.

As the fluid enters the system through the internal valve component, it passes through the aligned passages of the internal valve component and valve body and continues into the fluid system. Once the filling process is complete, the internal valve component may be transitioned to the closed position. In this position, the passages of the internal component no longer align with the inlet passage of the valve body, effectively sealing the system and preventing fluid from entering or exiting through the fill point. However, the internal component is designed to still allow fluid to circulate within the system, ensuring that the closed-loop fluid system can operate as intended.

In some examples, the internal valve component may include a barrier element that obstructs certain passages of the valve body to create a path of least resistance for air to escape from the system, typically through a designated venting passage, while fluid simultaneously fills the system. This ensures that air does not become trapped within the system, which could lead to inefficiencies or operational issues.

When the internal valve component transitions from the first position to the second position, the barrier moves away from the obstructed passage, allowing for normal fluid circulation. In the second position, the barrier no longer impedes the passage, and the fluid can flow freely through the valve body as part of the closed-loop system's regular operation.

In some examples, the internal valve component of the control valve comprises a plurality of channels to facilitate various stages of the system's operation, including venting, filling, and draining.

A venting channel provides a dedicated pathway for air to escape from the system as fluid is introduced. This channel is designed to allow air to rise and exit the system via the venting channel, wherein the venting channel may be incorporated into the internal valve component.

A filling channel provides a passage for fluid to enter the control valve and is directed through this channel into the system's internal pathways. The filling channel is dimensioned to allow for an optimal flow rate of fluid, ensuring that the system can be filled quickly and without creating turbulence or air pockets. The design of the filling channel may also incorporate features to interface with filling equipment, ensuring a secure and leak-free connection during the fill process.

A draining channel serves the purpose of allowing fluid to exit the closed-loop fluid system via the control valve. The draining channel is designed to provide a controlled and efficient means of fluid egress, and it may be equipped with a valve or plug to seal the system during normal operation and to open when draining is required.

In some examples, the position of the internal valve component within the valve body determines which channels are active. For example, during the filling process, the filling and venting channels would be open simultaneously to allow fluid in and air out, while the draining channel would be closed. Conversely, during draining, the draining channel would be open, and the filling and venting channels would be closed to prevent air ingress and fluid leakage. In some examples, air may be forced or otherwise injected into the system, such as via the filling channel, to intentionally promote fluid egress.

For example, in certain examples the valve body may be integrated within a reservoir of the closed-loop fluid system, and contains a series of passthroughs, each aligned with a specific channel of the internal valve component to facilitate the system's venting, filling, and draining processes.

The venting passthrough corresponds with the venting channel and provides an escape route for air within the system during the filling process.

The filling passthrough aligns with a filling channel of the internal valve component and is dimensioned to support an optimal flow rate for the system's filling requirements.

The draining passthrough aligns with the draining channel of the internal valve component, enabling the removal of fluid from the system when necessary.

In some examples, the internal valve component may include a plurality of O-rings that provide a seal around each passthrough of the valve body when the internal valve component is inserted into the valve body. For example, the one or more O-rings may provide a seal that isolates one or more of a filling channel, a draining channel, and a venting passage.

In some examples, the internal valve component may include a set of interface fittings that correspond with one or more of the multiple channels within the valve-for example, the venting, filling, and draining channels. The interface fittings may protrude from the valve body, thereby providing accessible connection points for external components to fill, drain, or vent the system.

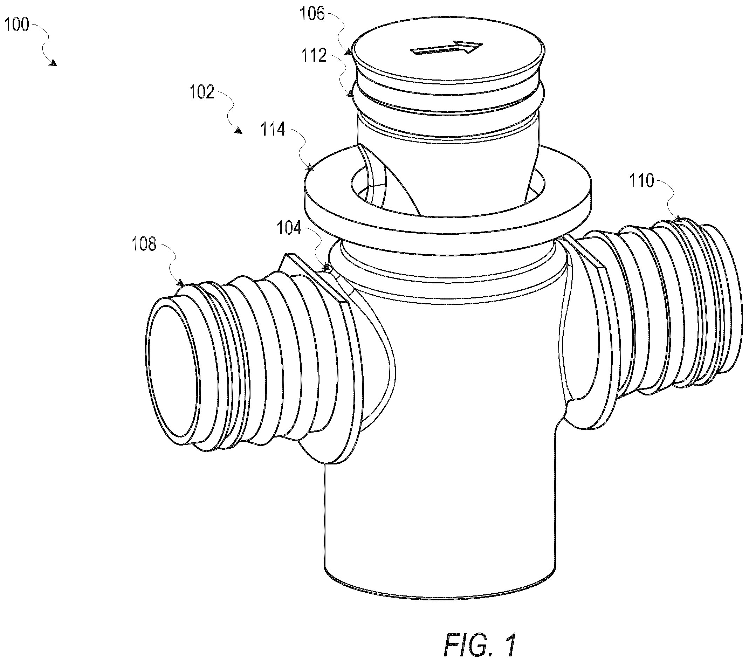

**FIG. 1** is a diagram 100 depicting an example of fast fill valve, according to certain examples. As seen in the diagram 100 the fast fill valve 102 includes a valve body 104 and an internal valve component 106, wherein the valve body 104 is depicted as having a generally cylindrical shape, and that retains the internal valve component 106. The valve body 104 is designed to interface with a system to circulate fluid through interface barbs 108 and 110. In some examples, the interface barbs may comprise features such as ridges or threads that provide a mechanical grip and seal when connected to conduits of a fluid system.

In some examples, one or more of the barbs 108 and 110 may include coolant quick connectors, which are specialized fittings designed to facilitate rapid and secure attachment or detachment of the valve body 104 to conduits of the fluid system. These quick connectors may include a locking mechanism that can be easily engaged or disengaged with a push or pull action, allowing for quick and tool-free connection changes.

Seated within the valve body 104 is the internal valve component 106. The internal valve component 106 is shown in the diagram 100 in a filling position, where it is designed to allow fluid to flow in one direction into the system while preventing backflow. This is achieved through the presence of a barrier on the internal valve component 106, which obstructs the flow of fluid in the reverse direction, thereby ensuring that the fluid enters the system without the risk of contamination or backflow.

An O-ring 112 is situated on the internal valve component 106, providing a seal between the internal valve component and the valve body 104 when the internal valve component 106 is pressed shut. The O-ring 112 is made from a material that is resilient and compatible with the fluids in the system, ensuring a durable and reliable seal that prevents leaks and maintains system pressure.

Additionally, the diagram 100 includes a flange interface 114 located on the valve body 104. This flange interface 114 is specifically designed to facilitate the attachment of the fast fill valve to a filling apparatus or component that is part of the fluid systems filling infrastructure. The flange interface 114 is configured to connect with corresponding fasteners on the filling apparatus, allowing for a secure and precise connection.

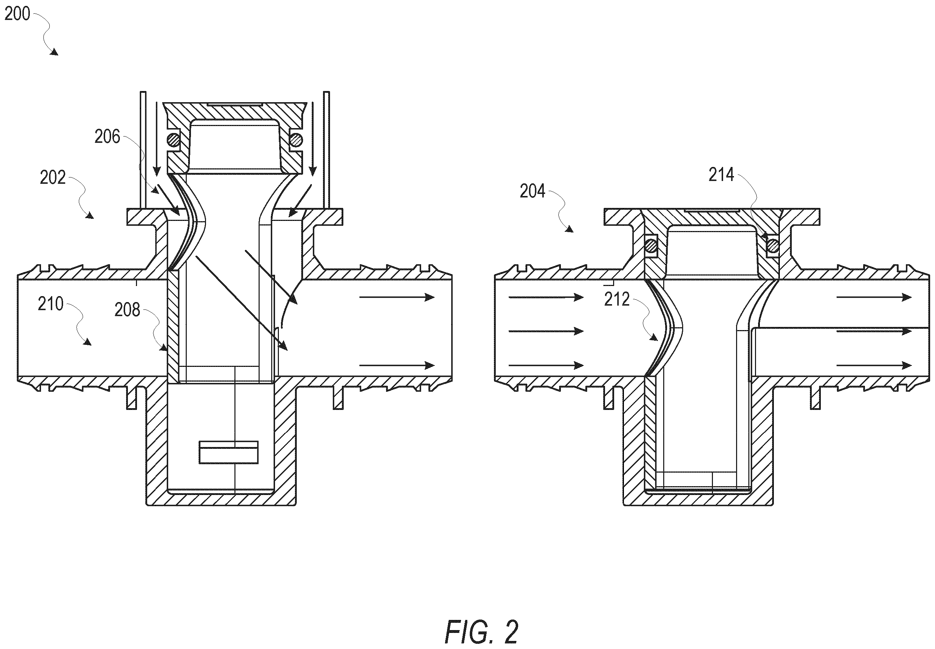

**FIG. 2** is a diagram 200 depicting an example of fast fill valve, according to certain examples, similar to the fast fill valve 102 depicted in FIG. 1. The diagram 200 provides a depiction of the fast fill valve in distinct operational positions: a filling position 202 and a normal operation position 204. These positions represent two functional states of the fast fill valve within a closed-loop fluid system.

In the filling position 202, the valve is configured to facilitate the introduction of fluid into the system. A barrier 208 is engaged within the valve, obstructing the fluid path 210 that is typically used during normal system operation. This obstruction by the barrier 208 is deliberate, as it redirects the incoming fluid entering the system through the passage 206. The passage 206 is specifically designed to accommodate the flow of fluid during the filling process, ensuring that the fluid is directed appropriately into the system while preventing any backflow or contamination.

Transitioning the fast fill valve into the normal operation position 204 involves the movement of the internal valve component to align with the system's fluid path 212. In this position, O-rings 214 engage to form a tight seal. This seal establishes the fluid path 212 through the fast fill valve, allowing for the normal circulation of fluid throughout the system.

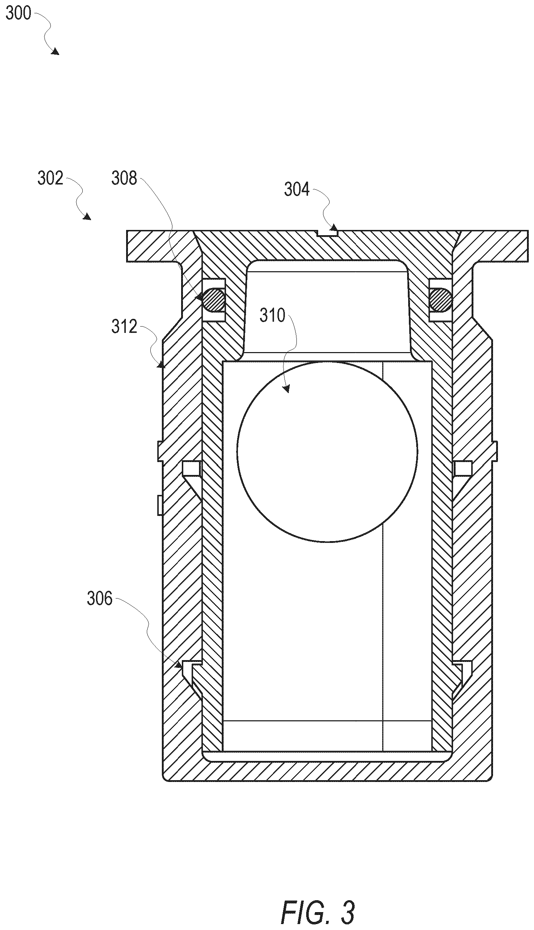

**FIG. 3** is a diagram 300 depicting an example of a fast fill valve 302 that includes one or more snap features 306, according to certain examples. As seen in the diagram 300, the fast fill valve 302 includes an internal valve component 304 equipped with O-rings 308 and a set of snap features 306 to engage with corresponding features of the valve body 312. The diagram 300 illustrates the fast fill valve 302 in a state where the snap features and O-rings are engaged, configuring the valve for normal operation within a closed-loop fluid system.

In some examples, the internal valve component 304 is designed to transition between different operational states. The O-rings 308 are positioned on the internal valve component 304 to create a fluid-tight seal within the valve body 312. These O-rings ensure that, during normal operation, fluid can flow unimpeded through a passage 310 within the closed-loop system. The O-rings 308 are made from a material that is selected for its durability and compatibility with the fluid in the system, providing a reliable seal that can withstand the operational pressures and temperatures.

The snap features 306 provide a secure and permanent locking of the internal valve component 304 within the valve body 312 in its operational position. Once engaged, the snap features 306 prevent any unintended movement or dislocation of the internal valve component 304, ensuring consistent and reliable operation of the fast fill valve 302.

In the engaged state, as shown in diagram 300, the fast fill valve 302 is in its normal operational mode, where the fluid path 310 is fully established, allowing for the circulation of fluid throughout the system.

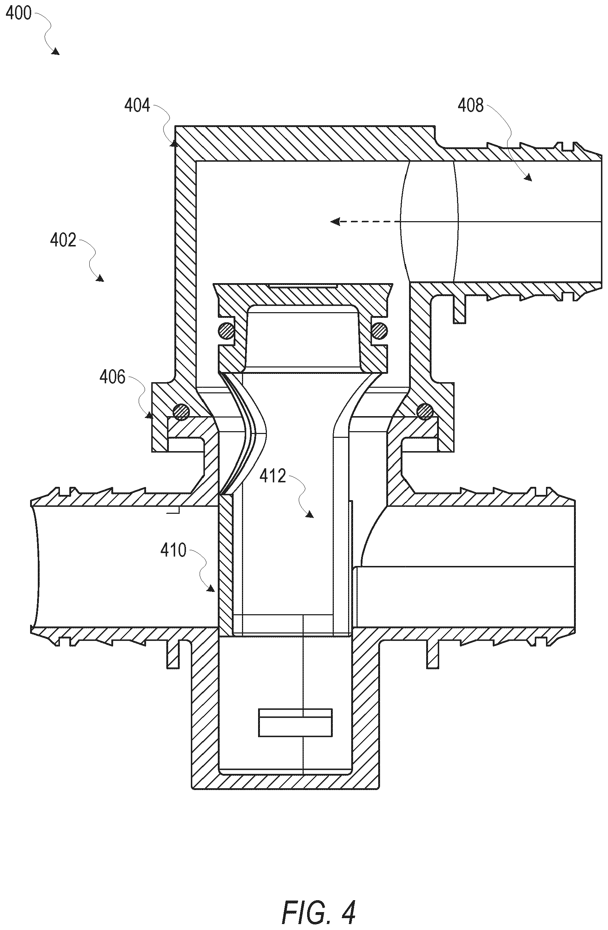

**FIG. 4** is a diagram 400 depicting an example of a fast fill valve 402 in a filling operational mode, according to certain examples. As seen in the diagram 400, a filling apparatus 404 may engage with a flange 406 located on the valve body of the fast fill valve 402.

The flange 406 serves as an interface point between the fast fill valve 402 and the filling apparatus 404. The flange 406 is designed to provide a secure and stable connection to the filling apparatus 404, ensuring that the fluid transfer can occur without leaks or disconnections. The flange 406 may include features such as bolt holes or clamping surfaces to facilitate a robust mechanical attachment to the filling apparatus 404.

Upon successful engagement with the filling apparatus 404, fluid is directed through a fluid path 408 into the fast fill valve 402. This fluid path 408 includes a passage 412 within the fast fill valve 402, allowing fluid to enter the system when the fast fill valve 402 while in the filling operational mode.

A barrier 410 within the fast fill valve 402 is positioned to prevent any backflow of fluid into the closed-loop system during the filling process. This barrier 410 ensures that the fluid is directed forward into the system and that the integrity of the fluid being introduced is maintained, preventing contamination and preserving the closed-loop system's operational efficiency.

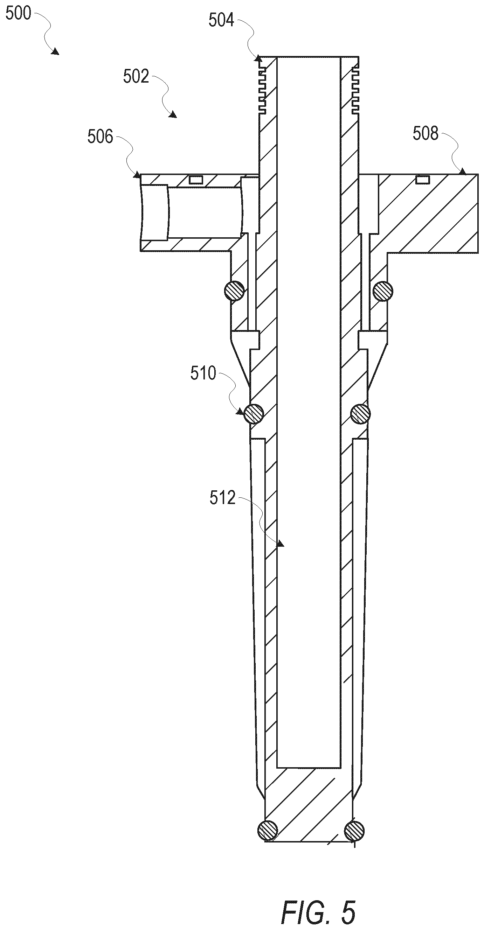

**FIG. 5** is a diagram 500 depicting a cross section of an internal valve component 502 of a fast fill valve, configured with one or more passages to allow for the rapid filling of the system with fluid while simultaneously venting, according to certain examples. This dual-functionality is achieved through a design that incorporates multiple passages within the internal valve component 502.

As depicted in the diagram 500, according to certain examples the internal valve component 502 comprises a fill adapter that is part of the fill equipment for the system. Accordingly, this fill adapter is designed to temporarily engage with the system during the filling process. When connected, the internal valve component 502 seals the system channels in such a way that fluid is pushed in through one opening while ensuring all the air is expelled through another channel in the valve internal component 502. This design not only streamlines the filling process but also reduces costs and potential reliability issues associated with permanently attached components. Once the filling operation is complete, the fill adapter is removed, leaving the system sealed and operational.

In some examples, the internal valve component 502 includes a plurality of interfaces-504, 506, and 508-that extend from the top of the component. Each of these interfaces is designed to connect with a separate passage within the internal valve component 502. These distinct passages are integral to the component's operation, with each interface serving as a dedicated conduit for either the filling, draining, or venting process. This design ensures that each interface can be individually connected to the appropriate fill or venting connections within the fluid system, streamlining the maintenance process.

As seen in the diagram 500, the internal valve component 502 includes Integral the O-rings 510. These O-rings are precisely positioned to establish seals around the respective passages associated with the interfaces 504, 506, and 508. The seals formed by the O-rings 510 are essential for preventing cross-contamination between the fill and vent pathways and for maintaining the system's pressure integrity during operation.

The diagram 500 includes a depiction of a passage 512 of the internal valve component 502, which may in some examples include a separate internal channel dedicated to either the filling or draining of fluid.

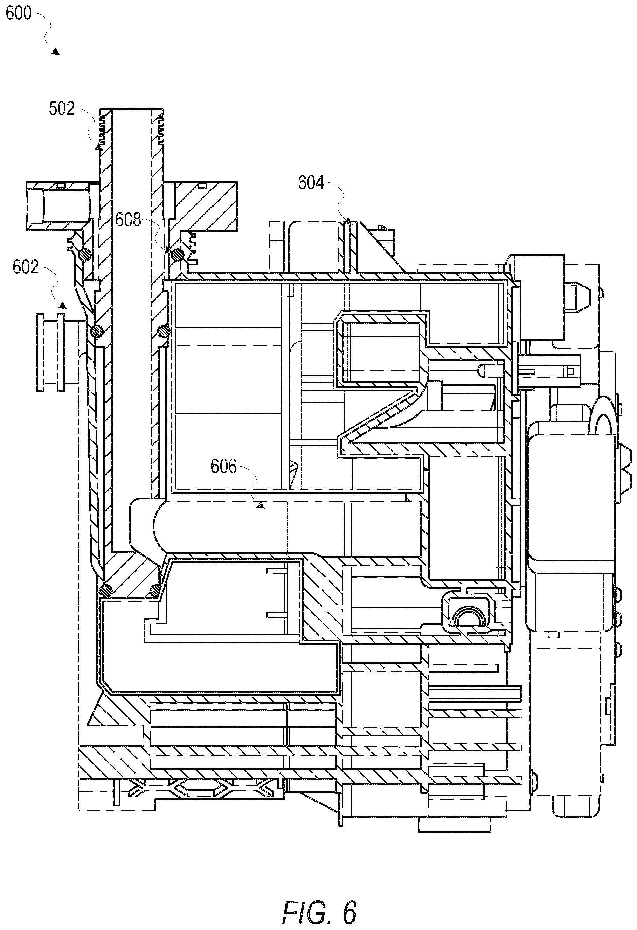

**FIG. 6** is a diagram 600 depicting an example of a fast fill valve, wherein a valve body 602 of the fast fill valve is integrated within a fluid reservoir 604 of a closed-loop fluid system, according to certain examples.

The diagram 600 illustrates an example of a fast fill valve system where the fill interface comprises a valve body 602 that is integrated within a fluid reservoir 604 of a closed-loop fluid system. Accordingly, the internal valve component 502 may be in the form of a fill adapter as described in the diagram 500 and may interface with the valve body 602 temporarily during the fill process.

The fluid reservoir 604, which includes passage 606, is configured to accept the internal valve component 502 (i.e., a fill adapter) in a manner that ensures a secure and airtight connection. When engaged, the internal valve component 502 facilitates the introduction of fluid into the closed-loop system while simultaneously allowing air to be purged from the system through designated channels depicted in the diagram 500. This temporary engagement of the fill adapter with the valve body 602 allows for a more efficient fill process and reduces the complexity and potential points of failure within the system by eliminating the need for a permanently attached control valve.

The internal valve component 502 is configured to be inserted into the valve body 602 within the fluid reservoir 604. The fluid reservoir 604 is equipped with one or more passages, such as passage 606, which facilitate the flow of fluid into the closed-loop system. Passage 606 is aligned with corresponding passages within the internal valve component 502 via the valve body 602.

Distributed along the surface of the internal valve component 502 are O-rings 608 and provide a fluid-tight seals between the internal valve component 502 and the valve body 602. These O-rings ensure that the alignment of passages between the internal valve component 502 and the fluid reservoir 604 does not result in any fluid leakage or air ingress.

Upon completion of the filling process, the internal valve component 502 is disengaged from the valve body 602, leaving the fluid reservoir 604 and the closed-loop system in a sealed state, ready for operation.

In some examples, the fill interface is implemented at a midpoint within the closed-loop fluid system, relative to a coolant reservoir of the system. By situating the fill interface in this manner, the system is designed to permit the coolant to flow bidirectionally from the fill point, effectively distributing the coolant evenly throughout the system.

As the fluid is introduced at the fill interface via a fill adapter (i.e., the internal valve component 502) at the midpoint of the loop, it travels both towards and away from the coolant reservoir, filling the system from the center outwards. This method reduces the time required to purge air from the system, as the symmetrical flow allows air pockets to be directed towards the nearest venting points, which are optimally positioned at both ends of the loop.

The design of the mid-fill variant includes a specialized internal valve component 502 that is adapted to control the bidirectional flow of coolant. This component is equipped with a mechanism that opens simultaneously in two directions, ensuring that the coolant is allowed to flow freely towards both ends of the loop. Upon completion of the fill process, the mid-fill valve is designed to close securely, ensuring that the system is sealed and pressurized as required for operation.

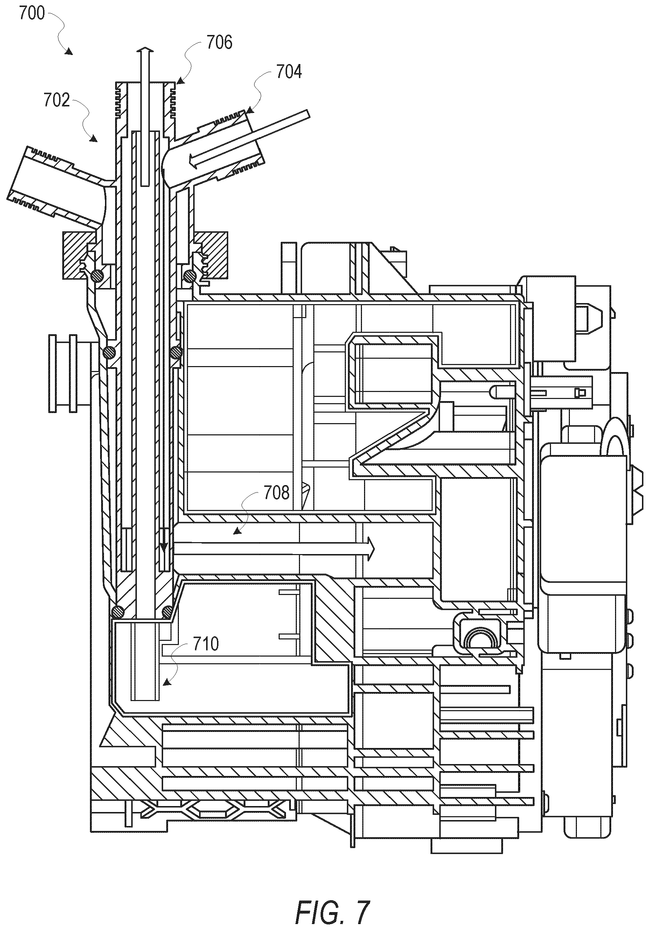

**FIG. 7** is a diagram 700 depicting an example of a fast fill valve 702, wherein a valve body of the fast fill valve is integrated within a fluid reservoir of a closed-loop fluid system to facilitate draining of fluid from within the closed-loop fluid system, according to certain examples.

In some examples, the fast fill valve 702 may facilitate the efficient draining of fluid from a closed-loop fluid system. The draining process may include forcing air into a passage 704 of the fast fill valve 702. The introduction of air into the system displaces the fluid within the closed-loop system, pushing it towards and eventually out of the passage 706.

The air is introduced via a channel 708 that is in alignment with passage 704. Channel 708 is specifically designed to facilitate the entry of air into the closed-loop fluid system, ensuring that the air is directed appropriately to displace the fluid without causing turbulence or airlocks that could impede the draining process.

As the air enters the system and begins to displace the fluid, the fluid is directed towards and through a channel 710. Channel 710 corresponds with passage 706 and serves as the exit route for the fluid being drained. The design of channel 710 ensures a smooth and continuous flow of fluid out of the system, effectively draining the fluid without leaving residual pockets behind.

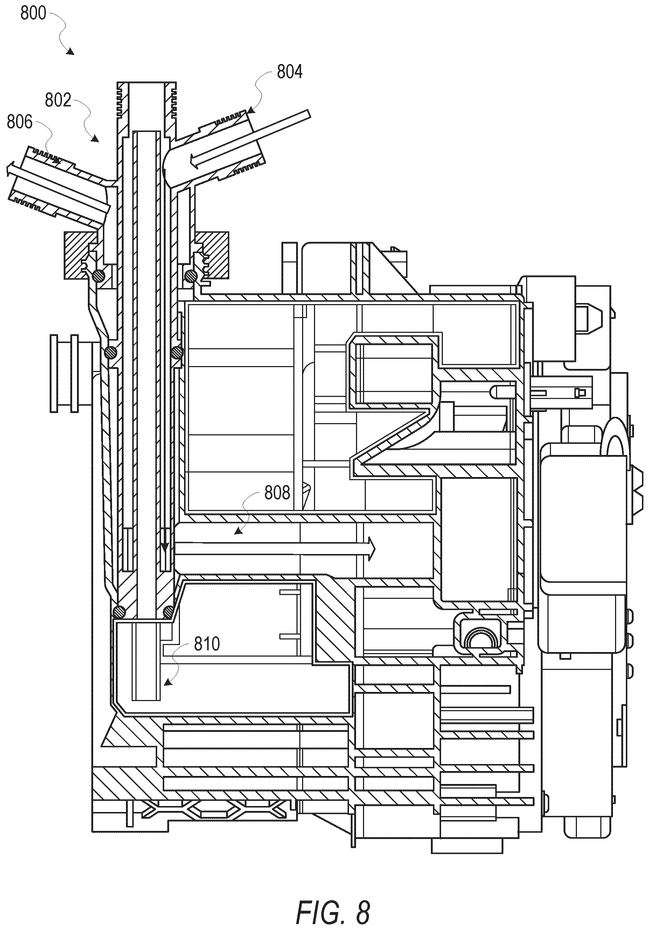

**FIG. 8** is a diagram 800 depicting an example of a fast fill valve 802, wherein a valve body of the fast fill valve is integrated within a fluid reservoir of a closed-loop fluid system, according to certain examples.

The diagram 800 provides an example of how the fast fill valve 802 is utilized to fill the closed-loop fluid system with fluid efficiently while also allowing for the venting of air from the system during the filling process.

The diagram 800 shows the fast fill valve 802 with a passage 804, which serves as the entry point for fluid into the fast fill valve 802. Passage 804 is connected to a passage 808 within the valve body. Passage 808 is designed to channel the incoming fluid directly into the fluid reservoir of the closed-loop fluid system.

As fluid is introduced into the closed-loop fluid system via the fast fill valve 802 through passage 804, air that is displaced or trapped within the system needs to be vented to prevent pressure build-up and to ensure complete filling. The venting of air is accomplished through passage 810, which leads from the fluid reservoir to a passage 806 of the fast fill valve 802. Passage 810 is specifically designed to allow air to escape from the fluid reservoir as it becomes displaced by the incoming fluid.

In some examples, the fast fill valve 802 facilitates a vacuum-assisted fill process. For example. the vacuum may be generated by pulling air out through passage 810 by a vacuum source placed at the passage 806. Vacuum sources may include one or more of: electric vacuum pumps; venturi vacuum systems; mechanical rotary vane pump; diaphragm pumps; liquid ring pumps; and piston pumps.

This process begins with the fast fill valve 802 creating a vacuum within the system to evacuate all air. The vacuum is generated by pulling air out through passage 810 by a vacuum source placed at the passage 806. This evacuation of air reduces the risk of air pockets and ensures that the fluid fills every part of the system.

Once a sufficient vacuum is achieved, the fluid is then introduced into the system through passage 804. The vacuum-assisted method allows the fluid to be drawn into the system more quickly and smoothly, as a higher pressure gradient may be achieved without increasing the maximum pressure of the fluid beyond the structural limits of the system or capabilities of the supply pump. This results in a faster fill time and can significantly improve production throughput. Additionally, the vacuum-assisted process can lead to a more consistent and reliable fill by eliminating the variability that can occur with traditional gravity-fed or pressure-based filling methods.

Further examples are set out in the clauses below:
1. A control valve for a closed-loop fluid system, comprising:
   a valve body to connect with a fluid hose of the closed-loop fluid system;
   an internal valve component movable from a first position to a second position, wherein the internal valve component functions as a one-way valve when in the first position, and allows fluid to flow through the fluid hose into or
   through the valve body when in the second position; and
   one or more O-rings fitted to the internal valve component to provide a fluid seal when in one or both of the first position and the second position.
2. The control valve for the closed-loop fluid system of clause 1, further comprising:
   a set of snap features integrated upon a surface of the valve body and the internal valve component to secure the internal valve component in the first position for fluid fill and in the second position for fluid circulation through the closed-loop fluid system.
3. The control valve for the closed-loop fluid system of clause 2, wherein the control valve further comprises an actuator mechanism that transitions the internal valve component from the first position to the second position and engages the set of snap features to permanently seal the internal valve component when in the second position.
4. The control valve for the closed-loop fluid system of any one of the preceding clauses, wherein the control valve is positioned downstream of a fluid reservoir of the closed-loop fluid system.
5. The control valve for the closed-loop fluid system of any one of the preceding clauses, wherein the control valve directs fluid flow in a single direction into the fluid hose of the closed-loop fluid system when in the first position.
6. The control valve for the closed-loop fluid system of any one of the preceding clauses, wherein the valve body comprises a generally cylindrical shape, and includes a pair of opposing barbs extending radially from the valve body to interface with the fluid hose of the closed-loop fluid system.
7. The control valve for the closed-loop fluid system of any one of the preceding clauses, wherein the valve body and internal valve component comprise a sleeve and insert arrangement, wherein the internal valve component is configured to slip into the valve body.
8. The control valve for the closed-loop fluid system of any one of the preceding clauses, wherein the internal valve component comprises one or more passthroughs that become aligned with one or more corresponding passages within the valve body when the internal valve component is in one or more of the first position and the second position.
9. The control valve for the closed-loop fluid system of any one of the preceding clauses, wherein the internal valve component comprises a barrier that obstructs a passage of the valve body when the internal valve component is in the first position.
10. The control valve for the closed-loop fluid system of any one of the preceding clauses, wherein the internal valve component comprises a plurality of channels that include a venting channel to allow air to escape the closed-loop fluid system via the control valve, a filling channel to enable entry of fluid into the closed-loop fluid system via the control valve, and a draining channel to enable fluid to exit the closed-loop fluid system via the control valve.
11. The control valve for the closed-loop fluid system of clause 10, wherein a flow of fluid through one or more of the plurality of channels is based on a position of the internal valve component within the valve body.
12. The control valve for the closed-loop fluid system of clause 10 or 11, wherein each channel from among the plurality of channels corresponds with one or more passthroughs of the internal valve component.
13. The control valve for the closed-loop fluid system of clause 10, wherein the internal valve component comprises a set of interface fittings that correspond with each channel from among the plurality of channels, and wherein the set of interface fittings protrude from the valve body to enable connection.
14. The control valve for the closed-loop fluid system of any one of the preceding clauses, wherein the valve body of the control valve is integrated into a fluid reservoir of the closed-loop fluid system.
15. The control valve for the closed-loop fluid system of any one of the preceding clauses, wherein the closed-loop fluid system comprises a cooling system to circulate coolant through one or more components.
16. The control valve for the closed-loop fluid system of any one of the preceding clauses, wherein the one or more O-rings seated upon the internal valve component include at least a first O-ring and a second O-ring positioned to create a seal around a passthrough of the internal valve component and a corresponding passage of the valve body.
17. The control valve for the closed-loop fluid system of any one of the preceding clauses, wherein the valve body further comprises a flange to engage with a fluid filling system.
18. A fluid control system for a closed-loop fluid system, comprising:
   a control valve that includes an internal valve component, the internal valve component comprising one or more operating positions that include a open configuration, the open configuration aligning an obstructive element of the internal valve component with a fluid path of the closed-loop fluid system and enabling fluid to flow into the fluid path via the control valve; and
   a venting passage that permits fluid to escape the closed-loop fluid system when the internal valve component is in the open configuration.
19. The fluid control system of clause 18, wherein the control valve is positioned downstream of the venting passage within a maximum volumetric defined as a quantity of a fluid capacity of the fluid path between the control valve and the venting passage.
20. The fluid control system of clause 18 or 19, wherein the internal valve component further comprises a plurality of channels that include a filling channel to enable entry of fluid into the closed-loop fluid system, wherein the venting passage is configured to allow air to escape the closed-loop fluid system, and a draining channel configured to enable fluid to exit the closed-loop fluid system, and wherein the one or more operating positions of the internal valve component include:
   a filling position wherein the filling channel and venting passage are open while the draining channel is closed; and
   a draining position wherein the draining channel is open while the filling channel and venting passage are closed.

### GLOSSARY

Fast Fill Valve: A device designed to expedite the process of introducing and circulating fluids within closed-loop systems, such as those used in automotive, aerospace, and HVAC applications.

Closed-Loop Fluid System: A system in which fluid circulates in a loop, often used for thermal management and cooling purposes in various industrial and automotive applications.

Valve Body: The main structure of the fast fill valve that interfaces with the fluid hose and contains the internal valve component.

Internal valve Component: A part within the valve body that functions as a one-way valve in one position and allows fluid to flow through in another position.

O-Ring: A circular gasket seated upon the internal valve component to provide a seal and prevent leaks.

Snap Features: Integrated features on the surface of the valve body and the internal valve component that secure the internal valve component in various positions for fluid fill and circulation.

Actuator Mechanism: A mechanism that transitions the internal valve component between positions and engages snap features to seal the valve.

Fluid Reservoir: A component of the closed-loop fluid system that stores fluid and may integrate the valve body of the fast fill valve.

Passage: A channel within the valve body or internal valve component that allows for the flow of fluid or air.

Channel: An internal pathway within the internal valve component designed for specific functions such as venting, filling, or draining.

Interface Fittings: Protruding parts of the internal valve component that correspond with channels for connecting to external components.

Fluid Path: The route taken by fluid as it moves through the fast fill valve and the closed-loop fluid system.

Venting Passage: A specific passage that permits air to escape the system during the filling process.

Draining: The process of removing fluid from the closed-loop fluid system, often facilitated by the fast fill valve.

Filling Apparatus: Equipment used to introduce fluid into the closed-loop fluid system through the fast fill valve.

Barbs: Features on the valve body that extend radially to interface with the fluid hose and secure the connection.

Sleeve and Insert Arrangement: A design where the internal valve component slips into the valve body, resembling a sleeve and insert configuration.

## Claims

1. A control valve for a closed-loop fluid system, comprising:
a valve body to connect with a fluid hose of the closed-loop fluid system;
an internal valve component movable from a first position to a second position, wherein the internal valve component functions as a one-way valve when in the first position, and allows fluid to flow through the fluid hose into or through the valve body when in the second position; and
one or more O-rings fitted to the internal valve component to provide a fluid seal when in one or both of the first position and the second position.

2. The control valve for the closed-loop fluid system of claim 1, further comprising:
a set of snap features integrated upon a surface of the valve body and the internal valve component to secure the internal valve component in the first position for fluid fill and in the second position for fluid circulation through the closed-loop fluid system.

3. The control valve for the closed-loop fluid system of claim 2, wherein the control valve further comprises an actuator mechanism that transitions the internal valve component from the first position to the second position and engages the set of snap features to permanently seal the internal valve component when in the second position.

4. The control valve for the closed-loop fluid system of any one of the preceding claims, wherein the control valve is positioned downstream of a fluid reservoir of the closed-loop fluid system.

5. The control valve for the closed-loop fluid system of any one of the preceding claims, wherein the control valve directs fluid flow in a single direction into the fluid hose of the closed-loop fluid system when in the first position.

6. The control valve for the closed-loop fluid system of any one of the preceding claims, wherein the valve body comprises a generally cylindrical shape, and includes a pair of opposing barbs extending radially from the valve body to interface with the fluid hose of the closed-loop fluid system.

7. The control valve for the closed-loop fluid system of any one of the preceding claims, wherein the valve body and internal valve component comprise a sleeve and insert arrangement, wherein the internal valve component is configured to slip into the valve body.

8. The control valve for the closed-loop fluid system of any one of the preceding claims, wherein the internal valve component comprises one or more passthroughs that become aligned with one or more corresponding passages within the valve body when the internal valve component is in one or more of the first position and the second position.

9. The control valve for the closed-loop fluid system of any one of the preceding claims, wherein the internal valve component comprises a barrier that obstructs a passage of the valve body when the internal valve component is in the first position.

10. The control valve for the closed-loop fluid system of any one of the preceding claims, wherein the internal valve component comprises a plurality of channels that include a venting channel to allow air to escape the closed-loop fluid system via the control valve, a filling channel to enable entry of fluid into the closed-loop fluid system via the control valve, and a draining channel to enable fluid to exit the closed-loop fluid system via the control valve.

11. The control valve for the closed-loop fluid system of claim 10, wherein a flow of fluid through one or more of the plurality of channels is based on a position of the internal valve component within the valve body.

12. The control valve for the closed-loop fluid system of claim 10, wherein each channel from among the plurality of channels corresponds with one or more passthroughs of the internal valve component.

13. The control valve for the closed-loop fluid system of claim 10, wherein the internal valve component comprises a set of interface fittings that correspond with each channel from among the plurality of channels, and wherein the set of interface fittings protrude from the valve body to enable connection; or optionally
wherein the valve body of the control valve is integrated into a fluid reservoir of the closed-loop fluid system; or optionally wherein the closed-loop fluid system comprises a cooling system to circulate coolant through one or more components; or optionally
wherein the one or more O-rings seated upon the internal valve component include at least a first O-ring and a second O-ring positioned to create a seal around a passthrough of the internal valve component and a corresponding passage of the valve body; or optionally
wherein the valve body further comprises a flange to engage with a fluid filling system.

14. A fluid control system for a closed-loop fluid system, comprising:
a control valve that includes an internal valve component, the internal valve component comprising one or more operating positions that include a open configuration, the open configuration aligning an obstructive element of the internal valve component with a fluid path of the closed-loop fluid system and enabling fluid to flow into the fluid path via the control valve; and
a venting passage that permits fluid to escape the closed-loop fluid system when the internal valve component is in the open configuration.

15. The fluid control system of claim 14, wherein the control valve is positioned downstream of the venting passage within a maximum volumetric defined as a quantity of a fluid capacity of the fluid path between the control valve and the venting passage; or optionally
wherein the internal valve component further comprises a plurality of channels that include a filling channel to enable entry of fluid into the closed-loop fluid system, wherein the venting passage is configured to allow air to escape the closed-loop fluid system, and a draining channel configured to enable fluid to exit the closed-loop fluid system, and wherein the one or more operating positions of the internal valve component include:
a filling position wherein the filling channel and venting passage are open while the draining channel is closed; and
a draining position wherein the draining channel is open while the filling channel and venting passage are closed.
